# EUROPÄISCHE PATENTSCHRIFT

(11) **EP 4 134 273 B1**
(45) Veröffentlichungstag und Bekanntmachung des Hinweises auf die Patenterteilung: **01.04.2026**
(21) Anmeldenummer: 21190788.6
(22) Anmeldetag: 11.08.2021
(51) Int. Cl.: B60N 3/10, B60R 11/02, B60N 3/00

(54) **KRAFTFAHRZEUGSITZANORDNUNG**
MOTOR VEHICLE SEAT ASSEMBLY
AGENCEMENT DE SIÈGE DE VÉHICULE AUTOMOBILE

(43) Veröffentlichungstag der Anmeldung: 15.02.2023
(73) Patentinhaber: Kinetix AG, 7000 Chur (CH)
(72) Erfinder: Braun, Michael, 72213 Altensteig (DE); Keller, Michael Andreas, 72250 Freudenstadt (DE); Dyczka, Wojtek, 72226 Simmersfeld-Oberweiler (DE); Spang, Peter, 72178 Waldachtal (DE)
(74) Vertreter: DREISS Patentanwälte PartG mbB

(56) Entgegenhaltungen:
- DE-A1- 102009 030 895
- DE-A1- 102014 222 672
- DE-A1- 102015 206 262
- DE-A1- 102019 103 872
- US-A1- 2016 172 797

## Beschreibung

Die Erfindung betrifft eine Kraftfahrzeugsitzanordnung mit den Merkmalen des Oberbegriffs des Patentanspruchs 1, gemäß US 2016/172797 A1.

Eine weitere Kraftfahrzeugsitzanordnung ist - für das Beispiel des Kraftfahrzeugherstellers BMW - unter der Bezeichnung "Travel & Comfort System" bekannt. Dieses System ermöglicht eine flexible und einfache Befestigung unterschiedlicher Zubehörteile an einem Kraftfahrzeugsitz; in der Praxis hat sich das System auch aufgrund seines hohen Bedienkomforts und seiner hohen Sicherheit im Crashfall bewährt.

Aus der DE 10 2014 222 672 A1, der DE 10 2009 030 895 A1, der DE 10 2015 206 262 A1 und der DE 10 2019 103 872 A1 sind weitere Kraftfahrzeugsitzanordnungen bekannt.

Der Erfindung liegt die Aufgabe zugrunde, eine Kraftfahrzeugsitzanordnung vorzuschlagen, welche sich auch zum Halten von relativ schweren elektronischen Geräten eignet.

Diese Aufgabe wird bei einer Kraftfahrzeugsitzanordnung der eingangs genannten Art durch die kennzeichnenden Merkmale des Patentanspruchs 1 gelöst.

Die erfindungsgemäße Kraftfahrzeugsitzanordnung ermöglicht es außerdem, mehrere Steckteile gleichzeitig mit einem Kraftfahrzeugsitz zu verbinden, und zwar von derselben Seite des Kraftfahrzeugsitzes aus. Insbesondere kann ein Zugriff auf die Aufnahmebuchse und die zusätzliche Aufnahmebuchse aus einem rückwärtigen Sitzraum eines Kraftfahrzeugs in Richtung auf eine Rückseite eines Vordersitzes erfolgen.

Die Aufnahmebuchse und die zusätzliche Aufnahmebuchse sind in der Höhe zueinander versetzt angeordnet. Dies ermöglicht eine Nutzung der beiden Aufnahmebuchsen verteilt über einen Teil der Höhe des Kraftfahrzeugsitzes, also entlang einer vertikalen Verteilungsachse der Aufnahmebuchsen.

Der Kraftfahrzeugsitz weist eine Rückenlehne auf, wobei die Aufnahmebuchse und die zusätzliche Aufnahmebuchse in der Rückenlehne angeordnet sind. Die Rückenlehne erstreckt sich über eine vergleichsweise große Fläche, sodass die Integration der beiden Aufnahmebuchsen in diesem Bereich erfolgen kann, ohne die Stabilität der Rückenlehne zu gefährden. Die Rückenlehne ist zur Anordnung der Aufnahmebuchse und der zusätzlichen Aufnahmebuchse geeignet.

Insbesondere für zwei Aufnahmebuchsen, die relativ nah beieinander angeordnet sind (bspw. einen Abstand von maximal 20cm zueinander aufweisen), ist es vorteilhaft, wenn die Einstecköffnung und die zusätzliche Einstecköffnung durch ein gemeinsames, sitzseitiges Rahmenteil begrenzt sind. Dies ermöglicht eine einfache Definition der Relativlage der beiden Einstecköffnungen. Die Erfindung sieht ferner vor, dass das mindestens eine Zubehörteil das zusätzliche Steckteil aufweist, wobei das Steckteil des Zubehörteils in die Einstecköffnung der Aufnahmebuchse und gleichzeitig das zusätzliche Steckteil desselben Zubehörteils in die zusätzliche Einstecköffnung der zusätzlichen Aufnahmebuchse einsteckbar oder eingesteckt sind. Auf diese Weise kann dasselbe Zubehörteil in zwei Aufnahmebuchsen gleichzeitig fixiert werden, wodurch eine besonders stabile Anordnung geschaffen wird. Der Abstand zwischen den beiden Aufnahmebuchsen trägt dazu bei, durch das Gewicht des Zubehörteils über die Steckteile und in den Aufnahmebuchsen wirkende Biegemomente besser aufnehmen zu können.

Für einen besonders stabilen Aufbau des Zubehörteils wird vorgeschlagen, dass das Zubehörteil einen Brückenabschnitt aufweist, von welchem das Steckteil und das zusätzliche Steckteil abragen, wobei ein einstückiger Aufbau denkbar ist oder auch eine Zwischenschaltung weiterer Bauteile (beispielsweise Adapter oder Gelenke).

Bevorzugt ist es ferner, wenn das Steckteil und die Aufnahmebuchse mittels einer Rastverbindung lösbar miteinander verrastbar sind, um einen sicheren Halt des Steckteils in der Aufnahmebuchse zu gewährleisten. Dies gilt in entsprechender Weise, wenn das zusätzliche Steckteil und die zusätzliche Aufnahmebuchse mittels einer zusätzlichen Rastvorrichtung lösbar miteinander verrastbar sind.

Jede der vorgenannten Rastvorrichtungen kann, bspw. über miteinander als Hinterschnitt zusammenwirkende Formschlussflächen, jeweils ausschließlich formschlüssig wirksam sein (in diesem Fall ist es bevorzugt, wenn ein Betätigungsabschnitt zum Lösen der Rastvorrichtung vorgesehen ist). Die vorgenannten Rastvorrichtungen können auch, bspw. über miteinander in Kontakt stehende Keilflächen, sowohl formschlüssig als auch reibschlüssig wirksam sein (in diesem Fall ist es möglich, dass die Rastvorrichtung lösbar ist nur durch Aufbringen einer entsprechenden Auszugskraft, wobei ein Betätigungsabschnitt nicht vorgesehen sein muss, aber optional vorgesehen sein kann).

Für den Fall von zwei Rastvorrichtungen ist es bevorzugt, wenn die Rastvorrichtung und die zusätzliche Rastvorrichtung miteinander bewegungsgekoppelt sind und wenn das mindestens eine Zubehörteil mindestens einen Betätigungsabschnitt aufweist, bei dessen Betätigung die Rastvorrichtung und die zusätzliche Rastvorrichtung gleichzeitig lösbar sind. Dies bedeutet, dass ein mechanischer Formschluss, der bei einer Verrastung zwischen jeweils einem Steckteil und jeweils einer Aufnahmebuchse wirksam ist, durch Betätigung eines Betätigungsabschnitts gelöst wird. Insbesondere ist es denkbar, dass zwei Betätigungsabschnitte vorgesehen sind, welche in einander entgegengesetzten Richtungen betätigbar sind und eine Betätigungsbewegung jeweils auf unterschiedliche Formschlusselemente unterschiedlicher Rastvorrichtungen übertragen.

Eine weitere Ausführungsform der Erfindung sieht vor, dass das zusätzliche Steckteil und die zusätzliche Aufnahmebuchse miteinander reibschlüssig verbunden sind. Diese Anordnung kann zu einer besonders geräuscharmen Anordnung (also "ohne Klappern") beitragen. Gleichzeitig ermöglicht es eine solche Anordnung, hohe Biegemomente aufnehmen zu können.

Insbesondere ist es bevorzugt, wenn das mindestens eine Zubehörteil einen Halter umfasst, der zum Halten eines elektronischen Geräts ausgelegt ist, das ein Gewicht von 1 kg oder größer aufweist. Durch die Möglichkeit, ein solches Zubehörteil in zwei Aufnahmebuchsen gleichzeitig zu fixieren, können also nunmehr auch relativ schwere elektronische Geräte an einem Kraftfahrzeugsitz gehalten werden, wobei bedarfsweise aber auch leichtere Geräte an dem Halter gehalten werden können.

Insbesondere kann es sich bei dem elektronischen Gerät um einen Laptop oder einen Monitor handeln.

Die Möglichkeit, mittels zwei Aufnahmebuchsen sehr hohe Biegemomente aufnehmen zu können, trägt zu einer hohen Crashsicherheit der Kraftfahrzeugsitzanordnung bei. Insbesondere ist die Kraftfahrzeugsitzanordnung derart ausgelegt, dass in einem an dem Kraftfahrzeugsitz eingesteckten Zustand des Zubehörteils das Zubehörteil bei einer während eines Crashtests auftretenden durchschnittlichen Beschleunigung des Zubehörteils von 30 g zerstörungsfrei an dem Kraftfahrzeugsitz verbleibt. Bei einem Frontal- oder Heckaufprall wirkt die Beschleunigung im Wesentlichen entlang der Fahrzeuglängsachse; bei einem Seitenaufprall vornehmlich entlang einer Fahrzeugquerachse.

Es ist ferner bevorzugt, dass die Kraftfahrzeugsitzanordnung mindestens ein Zubehörteil umfasst, das beispielsweise als Kleiderhaken, als Kleiderbügel, als Tisch, als Klapptisch, als Aufbewahrungs- oder Abfallbehälter, als Schirmhalter oder -aufnahme, als Getränkehalter oder als Halter für ein Smartphone, einen Tabletcomputer oder eine Kamera ausgebildet ist. Solch ein Zubehörteil weist jeweils ein Steckteil und ein zusätzliches Steckteil auf, und kann mit den beiden Aufnahmebuchsen der Kraftfahrzeugsitzanordnung verbunden werden.

Insgesamt ergibt sich eine sehr flexible und gleichzeitig sichere Nutzung von Zubehörteilen der Kraftfahrzeugsitzanordnung.

Weitere Merkmale und Vorteile der Erfindung sind Gegenstand der nachfolgenden Beschreibung.

In der Zeichnung zeigt
- Fig. 1: eine perspektivische Ansicht einer nicht erfindungsgemäßen Ausführungsform eines Kraftfahrzeugsitzes;
- Fig. 2: eine perspektivische Ansicht einer nicht erfindungsgemäßen Ausführungsform einer Kraftfahrzeugsitzanordnung mit einem Kraftfahrzeugsitz gemäß Fig. 1 und mit einem Zubehörteil;
- Fig. 3: einen Horizontalschnitt der nicht erfindungsgemäßen Kraftfahrzeugsitzanordnung gemäß Fig. 2;
- Fig. 4: eine perspektivische Ansicht einer nicht erfindungsgemäßen Kraftfahrzeugsitzanordnung mit einem Kraftfahrzeugsitz gemäß Fig. 1 und mit zusätzlichen Zubehörteilen;
- Fig. 5: eine perspektivische Ansicht einer Ausführungsform eines Kraftfahrzeugsitzes;
- Fig. 6: eine perspektivische Ansicht einer erfindungsgemäßen Ausführungsform einer Kraftfahrzeugsitzanordnung mit einem Kraftfahrzeugsitz gemäß Fig. 5 und mit einem abschnittsweise freigelegten Zubehörteil;
- Fig. 7: eine perspektivische Ansicht einer Kraftfahrzeugsitzanordnung mit einem Kraftfahrzeugsitz gemäß Fig. 5 und mit nicht erfindungsgemäßen Zubehörteilen; und
- Fig. 8: eine perspektivische Ansicht einer weiteren nicht erfindungsgehmäßen Ausführungsform einer Kraftfahrzeugsitzanordnung.

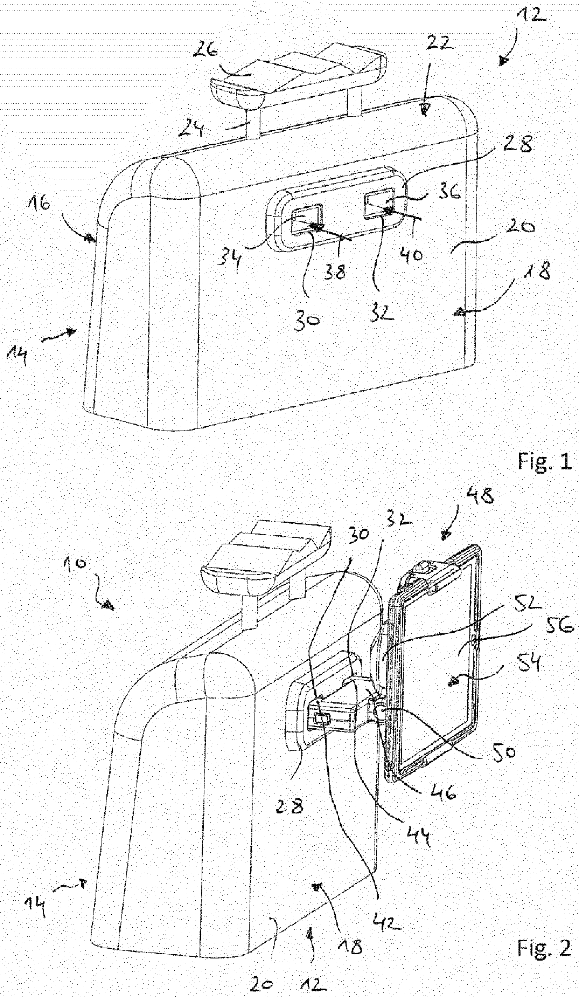

Ein Kraftfahrzeugsitz einer in Figur 2 dargestellten Kraftfahrzeugsitzanordnung 10 ist in Figur 1 mit dem Bezugszeichen 12 bezeichnet.

Der Kraftfahrzeugsitz 12 weist eine Rückenlehne 14 auf, mit einer Vorderseite 16 und mit einer Rückseite 18. Die Rückseite 18 weist eine Begrenzungsfläche 20 auf, welche beispielsweise durch eine Verkleidung oder durch einen Bezugsstoff der Rückenlehne 14 gebildet ist.

Bei dem in der Zeichnung dargestellten Ausführungsbeispiel erstreckt sich die Rückenlehne 14 bis hin zu einer Oberseite 22. Oberhalb der Oberseite 22 sind zwei Kopfstützenstangen 24 und eine Kopfstütze 26 (nur abschnittsweise dargestellt) angeordnet.

Bei einer in der Zeichnung nicht dargestellten Ausführungsform erstreckt sich die Rückenlehne 14 durchgängig bis in einen Kopfbereich hinein (sogenannter Integralsitz mit integrierter Kopfstütze).

An der Begrenzungsfläche 20 ist ein Rahmenteil 28 angeordnet, welches zwei Öffnungen aufweist, in Form einer Einstecköffnung 30 und in Form einer zusätzlichen Einstecköffnung 32. Die Einstecköffnung 30 ist einer Aufnahmebuchse 34 zugeordnet, welche sich ausgehend von der Begrenzungsfläche 20 der Rückenlehne 14 in Richtung auf die Vorderseite 16 der Rückenlehne 14 erstreckt. Die zusätzliche Einstecköffnung 32 ist einer zusätzlichen Aufnahmebuchse 36 zugeordnet, welche sich ebenfalls ausgehend von der Begrenzungsfläche 20 in Richtung auf die Vorderseite 16 der Rückenlehne 14 erstreckt.

Vorzugsweise sind die Aufnahmebuchsen 34 und 36 hinsichtlich ihrer Abmessungen miteinander identisch.

Den Aufnahmebuchsen 34 und 36 sind mit Pfeilen 38 und 40 bezeichnete Einsteckrichtungen 38 und 40 zugeordnet. Die Einsteckrichtungen 38 und 40 verlaufen zueinander parallel und sind gleichgerichtet, bei dem dargestellten Ausführungsbeispiel von der Begrenzungsfläche 20 ausgehend in Richtung auf die Vorderseite 16 der Rückenlehne 14. Bei aufrechter Stellung der Rückenlehne 14 sind die Einsteckrichtungen 38 und 40 parallel zu einer Fahrzeuglängsachse ausgerichtet und können entweder beide in Fahrtrichtung nach vorne weisen oder beide in Fahrtrichtung nach hinten.

Bei dem in Figuren 1 und 2 dargestellten Ausführungsbeispiel sind die Aufnahmebuchse 34 und die zusätzliche Aufnahmebuchse 36 seitlich, also in Fahrzeugquerrichtung, zueinander versetzt angeordnet.

Die Aufnahmebuchsen 34 und 36 dienen jeweils zur Aufnahme eines Steckteils, wobei ein der Aufnahmebuchse 34 zugeordnetes Steckteil in Figur 2 mit dem Bezugszeichen 42 versehen ist und ein zusätzliches Steckteil, das der zusätzlichen Aufnahmebuchse 36 zugeordnet ist, mit dem Bezugszeichen 44.

Das Steckteil 42 und das zusätzliche Steckteil 44 ragen jeweils von einem Brückenabschnitt 46 ab, der den Abstand zwischen den Aufnahmebuchsen 34 und 36 überbrückt und der gemeinsam mit den Steckteilen 42 und 44 Bestandteil eines insgesamt mit dem Bezugszeichen 48 bezeichneten Zubehörteils ist. Bei dem dargestellten Ausführungsbeispiel umfasst das Zubehörteil 48 ein mit dem Brückenabschnitt verbundenes Gelenk 50 und einen Halter 52 für ein elektronisches Gerät 54, das beispielsweise als Monitor 56 ausgebildet ist.

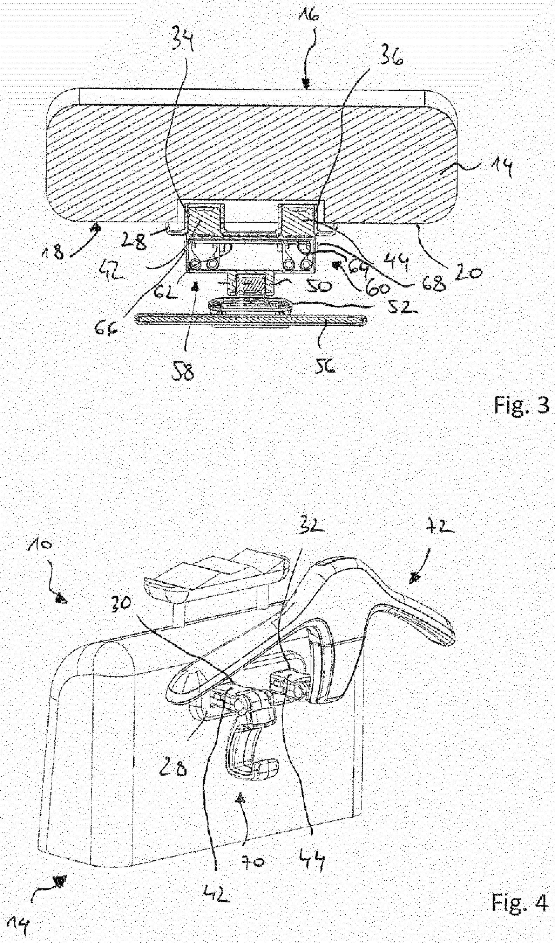

Zur Fixierung der Steckteile 42 und 44 in den Aufnahmebuchsen 34 und 36 sind eine dem Steckteil 42 zugeordnete Rastvorrichtung 58 und eine dem zusätzlichen Steckteil 44 zugeordnete zusätzliche Rastvorrichtung 60 vorgesehen, vergleiche Figur 3.

Jeweils zwei Rastelemente der beiden Rastvorrichtungen 58 und 60 sind über beispielsweise stangenförmige Kopplungselemente 62, 64 miteinander bewegungsgekoppelt.

Das Kopplungselement 62 ist mit einem Betätigungsabschnitt 66 verbunden, der benachbart zu dem Steckteil 42 angeordnet ist. Das Kopplungselement 64 ist mit einem Betätigungsabschnitt 68 verbunden, der benachbart zu dem zusätzlichen Steckteil 44 angeordnet ist.

Durch Druck auf die beiden Betätigungsabschnitte 66 und 68 können jeweils zwei Rastelemente der insgesamt vier Rastelemente der beiden Rastvorrichtungen 58 und 60 gleichzeitig betätigt werden, sodass die Rastverbindungen zwischen dem Steckteil 42 und der Aufnahmebuchse 34 und gleichzeitig zwischen dem zusätzlichen Steckteil 44 und der zusätzlichen Aufnahmebuchse 36 gelöst werden können.

Die Kraftfahrzeugsitzanordnung 10 mit Aufnahmebuchse 34 und der zusätzlichen Aufnahmebuchse 36 können auch für ein Steckteil 42 und ein zusätzliches Steckteil 44 genutzt werden, welche Zubehörteilen 70, 72 zugeordnet sind, die beispielsweise als Kleiderhaken und/oder als Kleiderbügel ausgebildet sind, vergleiche Figur 4.

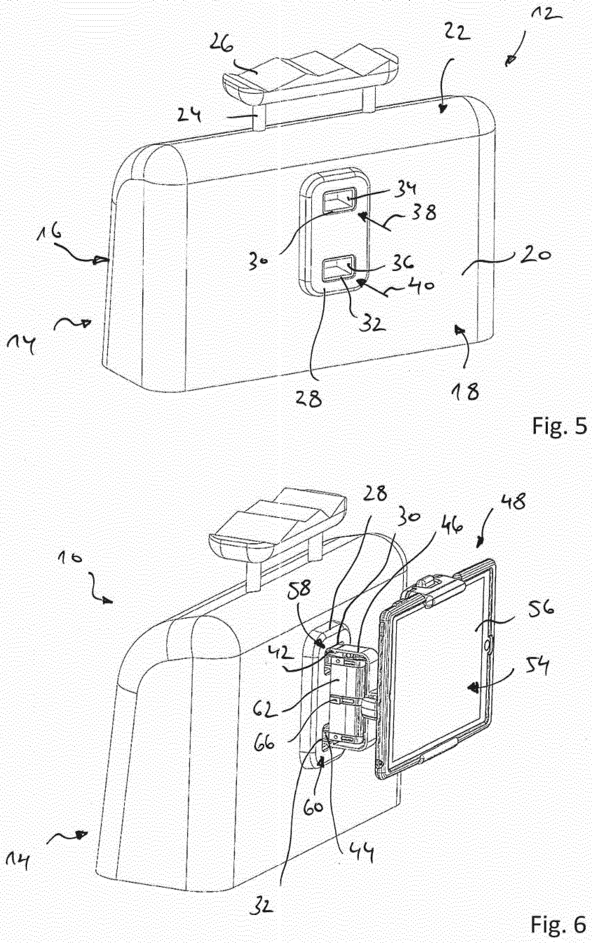

Eine in den Figuren 5 und 6 dargestellte Ausführungsform einer Kraftfahrzeugsitzanordnung 10 weist einen zu der vorstehend unter Bezugnahme auf die Figuren 1 bis 4 beschriebenen Kraftfahrzeugsitzanordnung 10 vergleichbaren Aufbau auf. Im Unterschied zu der vorstehend beschriebenen Ausführungsform sind die Aufnahmebuchse 34 und die zusätzliche Aufnahmebuchse 36 der Kraftfahrzeugsitzanordnung gemäß Figuren 5 und 6 in der Höhe zueinander versetzt angeordnet. Im Übrigen wird auf die vorstehende Beschreibung zu den Figuren 1 bis 4 Bezug genommen.

Bei der Anordnung eines Zubehörteils 48 mit zwei Steckteilen 42 und 44 und dem Höhenversatz der Aufnahmebuchsen 34 und 36 ist es möglich, abweichend von der Darstellung gemäß Figur 6, auf eine zusätzliche Rastvorrichtung zur Rastverbindung zwischen dem zusätzlichen Steckteil 44 und der zusätzlichen Aufnahmebuchse 36 zu verzichten. In diesem Fall ist es vorteilhaft, ein zusätzliches Steckteil 44 und die zusätzliche Aufnahmebuchse 36 lediglich reibschlüssig miteinander zu verbinden. Hierbei ist es bevorzugt, wenn die zusätzliche Aufnahmebuchse 36 unterhalb der Aufnahmebuchse 34 angeordnet, sodass eine Verrastung des Zubehörteils 48 an der oberen Aufnahmebuchse 34 erfolgt, wobei die zusätzliche untere Aufnahmebuchse 36 und deren reibschlüssige Verbindung mit dem zusätzlichen Steckteil 44 vornehmlich zur Aufnahme von Biegemomenten dient. Diese Biegemoment sind durch das Gewicht des elektronischen Geräts 54 und des Zubehörteils 48 bedingt und werden über das zusätzliche Steckteil 44 in die zusätzliche Aufnahmebuchse 36 übertragen.

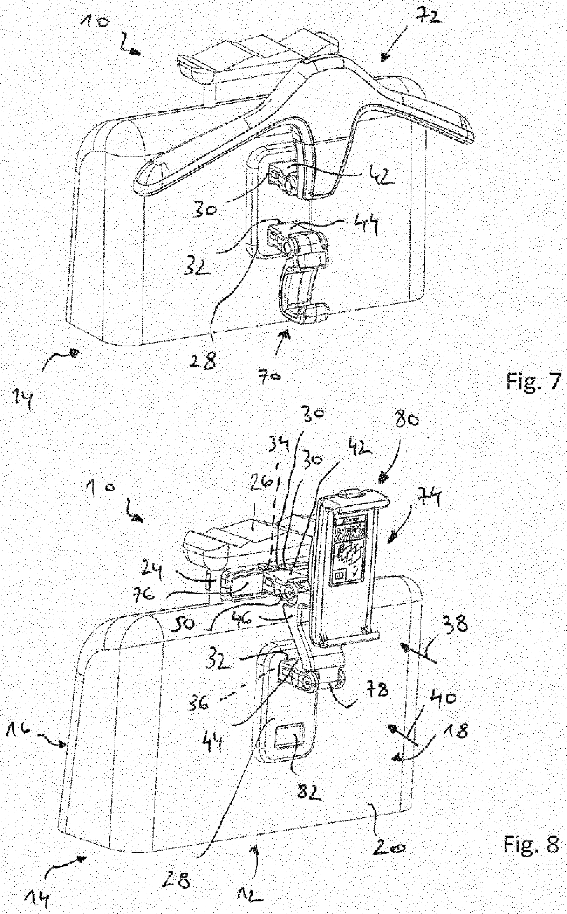

Auch die Kraftfahrzeugsitzanordnung 10 gemäß Figuren 5 und 6 ermöglicht eine flexible Nutzung für anderweitige Zubehörteile 70 und 72, vergleiche Figuren 4 und 7.

Eine in der Figur 8 dargestellte Ausführungsform einer Kraftfahrzeugsitzanordnung 10 dient ebenfalls zur lösbaren Befestigung eines Zubehörteils 74. Die Anordnung 10 gemäß Figur 8 umfasst einen Träger 76, der lösbar oder dauerhaft zwischen den Kopfstützenstangen 24 des Kraftfahrzeugsitzes 12 fixiert ist. Der Träger 76 weist eine Aufnahmebuchse 34 mit einer Einstecköffnung 30 auf.

Das Zubehörteil 74 weist ein Steckteil 42 auf, das mit der Aufnahmebuchse 34 verbindbar ist, vorzugsweise über eine lösbare Rastvorrichtung.

Das Zubehörteil 74 umfasst ein zusätzliches Steckteil 44, das über einen Brückenabschnitt 46 mit dem Steckteil 42 verbunden ist.

Der Brückenabschnitt 46 ist über ein Gelenk 50 mit dem Steckteil 42 und über ein zusätzliches Gelenk 78 mit dem zusätzlichen Steckteil 44 verbunden. Von dem Brückenabschnitt 46 ragt ein Halter 80 ab, der beispielsweise zum Halten eines Smartphones ausgebildet ist.

Zur Anordnung des Zubehörteils 74 an dem Kraftfahrzeugsitz 12 werden das Steckteil 42 und das zusätzliche Steckteil 44 zueinander parallel ausgerichtet und in zueinander parallelen und gleichgerichteten Einsteckrichtungen 38 und 40 in die Aufnahmebuchse 34 des Trägers 76 und in die zusätzliche Aufnahmebuchse 36 der Sitzlehne 14 eingeführt und dort jeweils verrastet.

Für den in Fig. 8 dargestellten Fall, dass die Rückenlehne 14 mit zwei Aufnahmebuchsen versehen ist, umfasst eine solche Anordnung eine dritte Aufnahmebuchse 82, welche, abweichend von der Darstellung in Figur 8, eine Nutzung mit einem zusätzlichen Zubehörteil ermöglicht, beispielsweise mit einem Zubehörteil 70 oder 72 gemäß Figur 7.

## Patentansprüche

1. Kraftfahrzeugsitzanordnung (10), mit einem Kraftfahrzeugsitz (12) und mit mindestens einem lösbar an dem Kraftfahrzeugsitz (12) befestigbaren Zubehörteil (48), wobei der Kraftfahrzeugsitz zur lösbaren Befestigung des Zubehörteils (48) eine Aufnahmebuchse (34) mit einer Einstecköffnung (30) aufweist und wobei das Zubehörteil (48) ein in die Einstecköffnung (30) der Aufnahmebuchse (34) einsteckbares Steckteil (42) aufweist, wobei der Kraftfahrzeugsitz (12) mindestens eine zu der Aufnahmebuchse (34) versetzt angeordnete zusätzliche Aufnahmebuchse (36) mit einer zusätzlichen Einstecköffnung (32) aufweist, und wobei der Einstecköffnung (30) und der zusätzlichen Einstecköffnung (32) zueinander parallele und gleichgerichtete Einsteckrichtungen (38, 40) für das Steckteil (42) und für ein zusätzliches Steckteil (44) zugeordnet sind, wobei der Kraftfahrzeugsitz (12) eine Rückenlehne (14) aufweist und wobei die Aufnahmebuchse (34) und die zusätzliche Aufnahmebuchse (36) in der Rückenlehne (14) angeordnet sind, wobei das Zubehörteil (48) das zusätzliche Steckteil (44) aufweist, wobei das Steckteil (42) des Zubehörteils (48) in die Einstecköffnung (30) der Aufnahmebuchse (34) und gleichzeitig das zusätzliche Steckteil (44) desselben Zubehörteils (48) in die zusätzliche Einstecköffnung (32) der zusätzlichen Aufnahmebuchse (36) einsteckbar oder eingesteckt sind, **dadurch gekennzeichnet, dass** die Aufnahmebuchse (34) und die zusätzliche Aufnahmebuchse (36) über einen Teil der Höhe des Kraftfahrzeugsitzes (12) entlang einer vertikalen Verteilungsachse der Aufnahmebuchsen (34, 36) zueinander versetzt angeordnet sind, wobei ein Abstand zwischen der Aufnahmebuchse (34) und der zusätzlichen Aufnahmebuchse (36) dazu beiträgt, durch das Gewicht des Zubehörteils (48) über die Steckteile (42, 44) und in den Aufnahmebuchsen (34, 36) wirkende Biegemomente besser aufnehmen zu können.

2. Kraftfahrzeugsitzanordnung (10) nach einem der vorstehenden Ansprüche, **dadurch gekennzeichnet, dass** die Einstecköffnung (30) und die zusätzliche Einstecköffnung (32) durch ein gemeinsames, sitzseitiges Rahmenteil (28) begrenzt sind.

3. Kraftfahrzeugsitzanordnung (10) nach einem der vorstehenden Ansprüche, **dadurch gekennzeichnet, dass** das Zubehörteil (48) einen Brückenabschnitt (46) aufweist, von welchem das Steckteil (42) und das zusätzliche Steckteil (44) abragen.

4. Kraftfahrzeugsitzanordnung (10) nach einem der vorstehenden Ansprüche, **dadurch gekennzeichnet, dass** das Steckteil (42) und die Aufnahmebuchse (34) mittels einer Rastvorrichtung (58) lösbar miteinander verrastbar sind.

5. Kraftfahrzeugsitzanordnung (10) nach einem der vorstehenden Ansprüche, **dadurch gekennzeichnet, dass** das zusätzliche Steckteil (44) und die zusätzliche Aufnahmebuchse (36) mittels einer zusätzlichen Rastvorrichtung (60) lösbar miteinander verrastbar sind.

6. Kraftfahrzeugsitzanordnung (10) nach Anspruch 4 und Anspruch 5, **dadurch gekennzeichnet, dass** die Rastvorrichtung (58) und die zusätzliche Rastvorrichtung (60) miteinander bewegungsgekoppelt sind und dass das mindestens eine Zubehörteil (48) mindestens einen Betätigungsabschnitt (66, 68) aufweist, bei dessen Betätigung die Rastvorrichtung (58) und die zusätzliche Rastvorrichtung (60) gleichzeitig lösbar sind.

7. Kraftfahrzeugsitzanordnung (10) nach einem der vorstehenden Ansprüche, **dadurch gekennzeichnet, dass** das zusätzliche Steckteil (44) und die zusätzliche Aufnahmebuchse (36) miteinander reibschlüssig verbunden sind.

8. Kraftfahrzeugsitzanordnung (10) nach einem der vorstehenden Ansprüche, **dadurch gekennzeichnet, dass** die Kraftfahrzeugsitzanordnung (10) mindestens ein Zubehörteil (70, 72, 74) umfasst, das als Kleiderhaken, als Kleiderbügel, als Tisch, als Klapptisch, als Aufbewahrungs- oder Abfallbehälter, als Schirmhalter oder Schirmaufnahme, als Getränkehalter oder als Halter (80) für ein Smartphone, einen Tabletcomputer oder eine Kamera ausgebildet ist.

## Claims

1. A motor vehicle seat assembly (10), comprising a motor vehicle seat (12) and having at least one accessory (48) that can be fastened releasably to the motor vehicle seat (12), wherein the motor vehicle seat has a receiving bushing (34) with an insertion opening (30) for the releasable fastening of the accessory (48), and wherein the accessory (48) has a plug-in part (42) that can be inserted into the insertion opening (30) of the receiving bushing (34), and wherein the motor vehicle seat (12) has at least one additional receiving bushing (36) that is arranged offset with respect to the receiving bushing (34) and that has an additional insertion opening (32), and in that the insertion opening (30) and the additional insertion opening (32) are assigned insertion directions (38, 40) for the plug-in part (42) and for an additional plug-in part (44), wherein the insertion directions (38, 40) are parallel to one another and are directed in the same direction, wherein the motor vehicle seat (12) has a backrest (14) and wherein the receiving bushing (34) and the additional receiving bushing (36) are arranged in the backrest (14), wherein the accessory (48) comprises the additional plug-in part (44), wherein the plug-in part (42) of the accessory (48) can be inserted or is inserted into the insertion opening (30) of receiving the bushing (34) and, at the same time, the additional plug-in part (44) of the same accessory (48) can be inserted or is inserted into the additional insertion opening (32) of the additional receiving bushing (36), **characterized in that** the receiving bushing (34) and the additional receiving bushing (36) are arranged offset from one another over part of the height of the motor vehicle seat (12) along a vertical distribution axis of the receiving bushings (34 ,36), wherein a distance between the receiving bushing (34) and the additional receiving bushing (36) contributes to better absorb bending moments which are caused by the weight of the accessory (48) and which act via the plug-in parts (42, 44) within the receiving bushings (34, 36).

2. The motor vehicle seat assembly (10) according to one of the preceding claims, **characterized in that** the insertion opening (30) and the additional insertion opening (32) are bounded by a common frame part (28) arranged on the seat side.

3. The motor vehicle seat assembly (10) according to one of the preceding claims, **characterized in that** the accessory (48) has a bridge section (46) from which the plug-in part (42) and the additional plug-in part (44) protrude.

4. The motor vehicle seat assembly (10) according to one of the preceding claims, **characterized in that** the plug-in part (42) and the receiving bushing (34) can be releasably latched to one another by means of a latching device (58).

5. The motor vehicle seat assembly (10) according to one of the preceding claims, **characterized in that** the additional plug-in part (44) and the additional receiving bushing (36) can be releasably latched to one another by the means of an additional latching device (60).

6. The motor vehicle seat assembly (10) according to claim 4 and claim 5, **characterized in that** the latching device (58) and the additional latching device (60) are motion-coupled to one another, and **in that** the at least one accessory (48) has at least one actuating section (66,68), upon actuation of which, the latching device (58) and the additional latching device (60) can be released simultaneously.

7. The motor vehicle seat assembly (10) according to one of the preceding claims, **characterized in that** the additional plug-in part (44) and the additional receiving bushing (36) are connected to one another in a frictional-locking manner.

8. The motor vehicle seat assembly (10) according to one of the preceding claims, **characterized in that** the motor vehicle seat assembly (10) comprises at least one accessory (70, 72, 74) configured as a coat hook, a coat hanger, a table, a folding table, a storage or waste container, an umbrella holder or receptacle, a beverage holder, or as a holder for any one of a smartphone, a tablet computer or a camera.

## Revendications

1. Dispositif de siège de véhicule (10), avec un siège de véhicule (12) et au moins un accessoire (48) amoviblement fixable sur le siège de véhicule (12), le siège de véhicule étant, pour la fixation amovible de l'accessoire (48), pourvu d'une douille de réception (34) présentant une ouverture d'insertion (30) et l'accessoire (48) présentant un élément enfichable (42) pouvant être introduit dans l'ouverture d'insertion (30) de la douille de réception (34), le siège de véhicule (12) présentant au moins une douille de réception supplémentaire (36) disposée décalée par rapport à la douille de réception (34) et pourvue d'une ouverture d'insertion supplémentaire (32), et l'ouverture d'insertion (30) et l'ouverture d'insertion supplémentaire (32) ayant des directions d'insertion (38, 40) parallèles et orientées dans le même sens l'une par rapport à l'autre, affectées à l'élément enfichable (42) et à un élément enfichable supplémentaire (44), le siège de véhicule (12) comprenant un dossier (14) et la douille de réception (34) et la douille de réception supplémentaire (36) étant disposées dans le dossier (14), l'accessoire (48) comprenant l'élément enfichable supplémentaire (44), l'élément enfichable (42) de l'accessoire (48) pouvant être introduit dans l'ouverture d'insertion (30) de la douille de réception (34) et simultanément l'élément enfichable supplémentaire (44) du même accessoire (48) pouvant être introduit dans l'ouverture d'insertion supplémentaire (32) de la douille de réception supplémentaire (36) ou étant ainsi introduits, ce qui est **caractérisé en ce que** la douille de réception (34) et la douille de réception supplémentaire (36) sont disposées l'une par rapport à l'autre de manière décalée sur une partie de la hauteur du siège de véhicule (12) le long d'un axe de répartition vertical des douilles de réception (34, 36), un espacement entre la douille de réception (34) et la douille de réception supplémentaire (36) contribuant à mieux absorber les moments de flexion générés par le poids de l'accessoire (48) via les éléments enfichables (42, 44) et dans les douilles de réception (34, 36).

2. Dispositif de siège de véhicule (10) selon l'une quelconque des revendications précédentes, **caractérisé en ce que** l'ouverture d'insertion (30) et l'ouverture d'insertion supplémentaire (32) sont délimitées par une pièce de cadre commune côté siège (28).

3. Dispositif de siège de véhicule (10) selon l'une quelconque des revendications précédentes, **caractérisé en ce que** l'accessoire (48) comporte un tronçon de pont (46) duquel dépassent l'élément enfichable (42) et l'élément enfichable supplémentaire (44).

4. Dispositif de siège de véhicule (10) selon l'une quelconque des revendications précédentes, **caractérisé en ce que** l'élément enfichable (42) et la douille de réception (34) peuvent être verrouillés l'un à l'autre de manière détachable au moyen d'un dispositif d'encliquetage (58).

5. Dispositif de siège de véhicule (10) selon l'une quelconque des revendications précédentes, **caractérisé en ce que** l'élément enfichable supplémentaire (44) et la douille de réception supplémentaire (36) peuvent être verrouillés l'un à l'autre de manière détachable au moyen d'un dispositif d'encliquetage supplémentaire (60).

6. Dispositif de siège de véhicule (10) selon la revendication 4 et la revendication 5, **caractérisé en ce que** le dispositif d'encliquetage (58) et le dispositif d'encliquetage supplémentaire (60) sont couplés en mouvement l'un à l'autre et que ledit au moins un accessoire (48) comporte au moins une section d'actionnement (66, 68) dont l'actionnement libère simultanément le dispositif d'encliquetage (58) et le dispositif d'encliquetage supplémentaire (60).

7. Dispositif de siège de véhicule (10) selon l'une quelconque des revendications précédentes, **caractérisé en ce que** l'élément enfichable supplémentaire (44) et la douille de réception supplémentaire (36) sont reliés entre eux par friction.

8. Dispositif de siège de véhicule (10) selon l'une quelconque des revendications précédentes, **caractérisé en ce que** le dispositif de siège de véhicule (10) comprend au moins un accessoire (70, 72, 74) qui est conçu comme un crochet pour vêtements, un cintre, une table, une table rabattable, un conteneur de rangement ou un récipient à déchets, un support de parapluie ou une fixation de parapluie, un porte-boisson ou un support (80) pour un smartphone, une tablette tactile ou une caméra.
